# EUROPEAN PATENT SPECIFICATION

(11) **EP 3 141 046 B1**
(45) Date of publication and mention of the grant of the patent: **07.03.2018**
(21) Application number: 15724428.6
(22) Date of filing: 05.05.2015
(51) Int. Cl.: H04W 52/02

(54) **MAXIMUM AWAY DURATION**
MAXIMALE ABWESENHEITSDAUER
DURÉE DE PÉRIODE D'ÉLOIGNEMENT MAXIMUM

(30) Priority: 05.05.2014 US 201461988867 P; 04.05.2015 US 201514703849
(43) Date of publication of application: 15.03.2017
(73) Proprietor: Qualcomm Incorporated, San Diego, CA 92121-1714 (US)
(72) Inventor: JAFARIAN, Amin, Princeton, New Jersey 08540 (US); ASTERJADHI, Alfred, San Diego, California 92121-1714 (US)
(74) Representative: Wegner, Hans
(86) International application number: PCT/US2015/029189
(87) International publication number: WO 2015/171576

(56) References cited:
- US-A1- 2008 182 567

## Description

### CLAIM OF PRIORITY UNDER 35 U.S.C. §119

The present Application for Patent claims benefit of U.S. Provisional Patent Application Serial No. 61/988,867, filed May 5, 2014, and U.S. Application No. 14/703,849, filed May 4, 2015.

### BACKGROUND

### Field of the Invention

Certain aspects of the present disclosure generally relate to wireless communications and, more particularly, to device power management with support for a max away duration (MAD) element.

### Relevant Background

Wireless communication networks are widely deployed to provide various communication services such as voice, video, packet data, messaging, broadcast, etc. These wireless networks may be multiple-access networks capable of supporting multiple users by sharing the available network resources. Examples of such multiple-access networks include Code Division Multiple Access (CDMA) networks, Time Division Multiple Access (TDMA) networks, Frequency Division Multiple Access (FDMA) networks, Orthogonal FDMA (OFDMA) networks, and Single-Carrier FDMA (SC-FDMA) networks.

In order to address the desire for greater coverage and increased communication range, various schemes are being developed. One such scheme is the sub-1-GHz frequency range (e.g., operating in the 902 - 928 MHz range in the United States) being developed by the Institute of Electrical and Electronics Engineers (IEEE) 802.11ah task force. This development is driven by the desire to utilize a frequency range that has greater wireless range than other IEEE 802.11 groups and has lower obstruction losses.

### SUMMARY

Certain aspects of the present disclosure provide an apparatus for wireless communications. The apparatus typically includes a processing system configured to generate a frame with an indication of a requested unavailable duration, wherein the requested unavailable duration comprises an amount of time for a device to be unavailable to communicate with the apparatus and an interface for outputting the frame.

Certain aspects of the present disclosure provide an apparatus for wireless communications. The apparatus typically includes an interface for receiving a frames from a plurality of devices with indications of requested unavailable durations and a processing system configured to determine, based on the requested unavailable durations, an amount of time for the apparatus to be unavailable to communicate with the devices and to take one or more actions based on the determination.

Certain aspects of the present disclosure provide a method for wireless communications by an apparatus. The method typically includes generating a frame with an indication of a requested unavailable duration, wherein the requested unavailable duration comprises an amount of time for a device to be unavailable to communicate with the apparatus, and outputting the frame for transmission.

Certain aspects of the present disclosure provide a method for wireless communications by an apparatus. The method typically includes receiving frames from a plurality of devices with indications of requested unavailable durations, determining, based on the requested unavailable durations, an amount of time for the apparatus to be unavailable to communicate with the devices, and taking one or more actions based on the determination.

certain aspects of the present disclosure provide an apparatus for wireless communications. The apparatus typically includes means for generating a frame with an indication of a requested unavailable duration, wherein the requested unavailable duration comprises an amount of time for a device to be unavailable to communicate with the apparatus, and means for outputting the frame for transmission.

US 2008/182567 A1 discloses techniques which take into account the Quality of Service (QoS) during establishment of a sleep cycle in a mobile station providing real-time services. Upon the mobile station's identification of a need for a real-time service to enter into sleep mode, a request conveying that need is sent to the base station. The base station replies with a start frame number and other sleep parameters. Thereafter the mobile station enters sleep mode comprising sleep intervals interleaved with listening intervals. To prevent transmission packets from being buffered at the mobile station for an excessive period of time due to attempts to transmit packets to the base station during a sleep interval, the length of the sleep interval is set so as not to exceed the maximum latency value reflecting the QoS of the real-time service negotiated during establishment of the real-time services.

Certain aspects of the present disclosure provide an apparatus for wireless communications. The apparatus typically includes means for receiving frames from a plurality of devices with indications of requested unavailable durations, means for determining, based on the requested unavailable durations, an amount of time for the apparatus to be unavailable to communicate with the devices, and means for taking one or more actions based on the determination.

Certain aspects of the present disclosure provide a station. The station typically includes at least one antenna, a processing system configured to generate a frame with an indication of a requested unavailable duration, wherein the requested unavailable duration comprises an amount of time for a device to be unavailable to communicate with the apparatus, and a transmitter for transmitting the frame via the at least one antenna.

Certain aspects of the present disclosure provide an access point. The access point typically includes at least one antenna, an interface for receiving frames, via the at least one antenna, from a plurality of devices with indications of requested unavailable durations, and a processing system configured to determine, based on the requested unavailable durations, an amount of time for the apparatus to be unavailable to communicate with the devices and to take one or more actions based on the determination.

Certain aspects of the present disclosure provide a computer program product for wireless communications by an apparatus. The computer program product typically includes a computer readable medium having instructions stored thereon for generating a frame with an indication of a requested unavailable duration, wherein the requested unavailable duration comprises an amount of time for a device to be unavailable to communicate with the apparatus, and outputting the frame for transmission.

Certain aspects of the present disclosure provide a computer program product for wireless communications by an apparatus. The computer program product typically includes a computer readable medium having instructions stored thereon for receiving frames from a plurality of devices with indications of requested unavailable durations determining, based on the requested unavailable durations, an amount of time for the apparatus to be unavailable to communicate with the devices, and taking one or more actions based on the determination.

Certain aspects also provide various methods, apparatuses, and computer program products capable of performing operations corresponding to those described above.

### BRIEF DESCRIPTION OF THE DRAWINGS

So that the manner in which the above-recited features of the present disclosure can be understood in detail, a more particular description, briefly summarized above, may be had by reference to aspects, some of which are illustrated in the appended drawings. It is to be noted, however, that the appended drawings illustrate only certain typical aspects of this disclosure and are therefore not to be considered limiting of its scope, for the description may admit to other equally effective aspects.
FIG. 1 illustrates a diagram of an example wireless communications network, in accordance with certain aspects of the present disclosure.
FIG. 2 illustrates a block diagram of an example access point and user terminals, in accordance with certain aspects of the present disclosure.
FIG. 3 illustrates a block diagram of an example wireless device, in accordance with certain aspects of the present disclosure.
Fig. 4 illustrates an example tree structure of a relay system, in accordance with certain aspects of the present disclosure.
FIGs. 5 and 6 illustrate example structures for specifying a maximum away duration (MAD), in accordance with certain aspects of the present disclosure.
FIG. 7 illustrates a block diagram of example operations for wireless communications, in accordance with certain aspects of the present disclosure.
FIG. 7A illustrates example means capable of performing the operations shown in FIG. 7.
FIG. 8 illustrates a block diagram of example operations for wireless communications, in accordance with certain aspects of the present disclosure.
FIG. 8A illustrates example means capable of performing the operations shown in FIG. 8.
FIGs. 9 and 10 illustrate example exchanges between a station and an access point, in accordance with certain aspects of the present disclosure.

### DETAILED DESCRIPTION

Aspects of the present disclosure provide mechanisms involving certain selective transmission mechanisms, such as an association process between stations ("STA") and access points ("AP"). By requesting a maximum time an access point is unavailable, a station may be able to help ensure certain latency requirements are met.

Various aspects of the disclosure are described more fully hereinafter with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein one skilled in the art should appreciate that the scope of the disclosure is intended to cover any aspect of the disclosure disclosed herein, whether implemented independently of or combined with any other aspect of the disclosure. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect of the disclosure disclosed herein may be embodied by one or more elements of a claim.

Although particular aspects are described herein, many variations and permutations of these aspects fall within the scope of the disclosure. Although some benefits and advantages of the preferred aspects are mentioned, the scope of the disclosure is not intended to be limited to particular benefits, uses, or objectives. Rather, aspects of the disclosure are intended to be broadly applicable to different wireless technologies, system configuration, networks, and transmission protocols, some of which are illustrated by way of example in the figures and in the following description of the preferred aspects. The detailed description and drawings are merely illustrative of the disclosure rather than limiting, the scope of the disclosure being defined by the appended claims and equivalents thereof.

### AN EXAMPLE WIRELESS COMMUNICATION SYSTEM

The techniques described herein may be used for various broadband wireless communication systems, including communication systems that are based on an orthogonal multiplexing scheme, Examples of such communication systems include Spatial Division Multiple Access (SDMA), Time Division Multiple Access (TDMA), Orthogonal Frequency Division Multiple Access (OFDMA) systems, Single-Carrier Frequency Division Multiple Access (SC-FDMA) systems, and so forth. An SDMA system may utilize sufficiently different directions to simultaneously transmit data belonging to multiple user terminals. A TDMA system may allow multiple user terminals to share the same frequency channel by dividing the transmission signal into different time slots, each time slot being assigned to different user terminal. An OFDMA system utilizes orthogonal frequency division multiplexing (OFDM), which is a modulation technique that partitions the overall system bandwidth into multiple orthogonal sub-carriers. These sub-carriers may also be called tones, bins, etc. With OFDM, each sub-carrier may be independently modulated with data. An SC-FDMA system may utilize interleaved FDMA (IFDMA) to transmit on sub-carriers that are distributed across the system bandwidth, localized FDMA (LFDMA) to transmit on a block of adjacent sub-carriers, or enhanced FDMA (EFDMA) to transmit on multiple blocks of adjacent sub-carriers. In general, modulation symbols are sent in the frequency domain with OFDM and in the time domain with SC-FDMA.

The teachings herein may be incorporated into (e.g., implemented within or performed by) a variety of wired or wireless apparatuses (e.g., nodes). In some aspects, a wireless node implemented in accordance with the teachings herein may comprise an access point or an access terminal.

An access point ("AP") may comprise, be implemented as, or known as a Node B, Radio Network Controller ("RNC"), evolved Node B (eNB), Base Station Controller ("BSC"), Base Transceiver Station ("BTS"), Base Station ("BS"), Transceiver Function ("TF"), Radio Router, Radio Transceiver, Basic Service Set ("BSS"), Extended Service Set ("ESS"), Radio Base Station ("RBS"), or some other terminology.

An access terminal ("AT") may comprise, be implemented as, or known as a subscriber station, a subscriber unit, a mobile station (MS), a remote station, a remote terminal, a user terminal (UT), a user agent, a user device, user equipment (UE), a user station, or some other terminology. In some implementations, an access terminal may comprise a cellular telephone, a cordless telephone, a Session Initiation Protocol ("SIP") phone, a wireless local loop ("WLL") station, a personal digital assistant (IPDA"), a handheld device having wireless connection capability, a Station ("STA"), or some other suitable processing device connected to a wireless modem. Accordingly, one or more aspects taught herein may be incorporated into a phone (e.g., a cellular phone or smart phone), a computer (e.g., a laptop), a tablet, a portable communication device, a portable computing device (e.g., a personal data assistant), an entertainment device (e.g., a music or video device, or a satellite radio), a global positioning system (GPS) device, or any other suitable device that is configured to communicate via a wireless or wired medium. In some aspects, the node is a wireless node. Such wireless node may provide, for example, connectivity for or to a network (e.g., a wide area network such as the Internet or a cellular network) via a wired or wireless communication link.

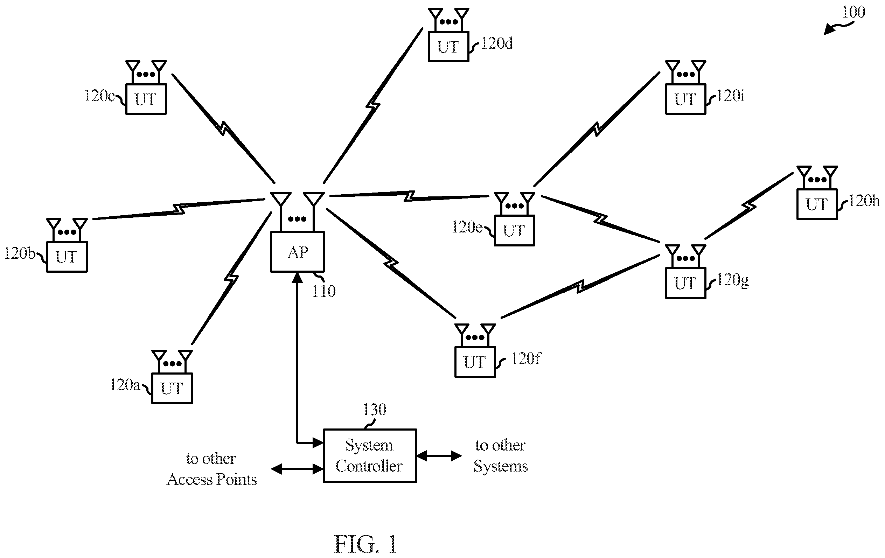

FIG. 1 illustrates a multiple-access multiple-input multiple-output (MIMO) system 100 with access points and user terminal. For simplicity, only one access point 110 is shown in FIG. 1. An access point is generally a fixed station that communicates with the user terminals and may also be referred to as a base station or some other terminology. A user terminal may be fixed or mobile and may also be referred to as a mobile station, a wireless device, or some other terminology. Access point 110 may communicate with one or more user terminals 120 at any given moment on the downlink and uplink. The downlink (i.e., forward link) is the communication link from the access point to the user terminals, and the uplink (i.e., reverse link) is the communication link from the user terminals to the access point. A user terminal may also communicate peer-to-peer with another user terminal. A system controller 130 couples to and provides coordination and control for the access points.

While portions of the following disclosure will describe user terminals 120 capable of communicating via Spatial Division Multiple Access (SDMA), for certain aspects, the user terminals 120 may also include some user terminals that do not support SDMA. Thus, for such aspects, an AP 110 may be configured to communicate with both SDMA and non-SDMA user terminals. This approach may conveniently allow older versions of user terminals ("legacy" stations) to remain deployed in an enterprise, extending their useful lifetime, while allowing newer SDMA user terminals to be introduced as deemed appropriate.

The system 100 employs multiple transmit and multiple receive antennas for data transmission on the downlink and uplink. The access point 110 is equipped with *Nₐₚ* antennas and represents the multiple-input (MI) for downlink transmissions and the multiple-output (MO) for uplink transmissions. A set of *K* selected user terminals 120 collectively represents the multiple-output for downlink transmissions and the multiple-input for uplink transmissions. For pure SDMA, it is desired to have *Nₐₚ* ≥ *K* ≥ 1 if the data symbol streams for the *K* user terminals are not multiplexed in code, frequency or time by some means. *K* may be greater than *Nₐₚ* if the data symbol streams can be multiplexed using TDMA technique, different code channels with CDMA, disjoint sets of subbands with OFDM, and so on. Each selected user terminal transmits user-specific data to and/or receives user-specific data from the access point. In general, each selected user terminal may be equipped with one or multiple antennas (i.e., *Nᵤₜ* ≥1). The *K* selected user terminals can have the same or different number of antennas.

The SDMA system may be a time division duplex (TDD) system or a frequency division duplex (FDD) system. For a TDD system, the downlink and uplink share the same frequency band. For an FDD system, the downlink and uplink use different frequency bands. MIMO system 100 may also utilize a single carrier or multiple carriers for transmission. Each user terminal may be equipped with a single antenna (e.g., in order to keep costs down) or multiple antennas (e.g., where the additional cost can be supported). The system 100 may also be a TDMA system if the user terminals 120 share the same frequency channel by dividing transmission/reception into different time slots, each time slot being assigned to different user terminal 120.

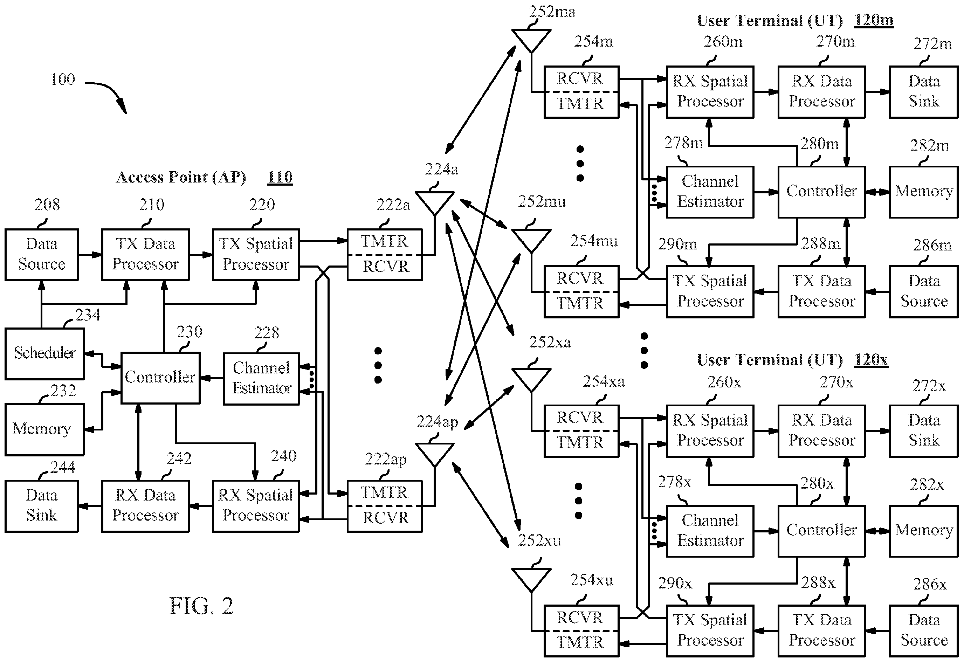

FIG. 2 illustrates a block diagram of access point 110 and two user terminals 120m and 120x in MIMO system 100. The access point 110 is equipped with *Nₜ* antennas 224a through 224t. User terminal 120m is equipped with *N*_{*ut*,*m*} antennas 252ma through 252mu, and user terminal 120x is equipped with *N*_{*ut*,*x*} antennas 252xa through 252xu. The access point 110 is a transmitting entity for the downlink and a receiving entity for the uplink. Each user terminal 120 is a transmitting entity for the uplink and a receiving entity for the downlink. As used herein, a "transmitting entity" is an independently operated apparatus or device capable of transmitting data via a wireless channel, and a "receiving entity" is an independently operated apparatus or device capable of receiving data via a wireless channel. In the following description, the subscript "*dn*" denotes the downlink, the subscript "*up*" denotes the uplink, *Nᵤₚ* user terminals are selected for simultaneous transmission on the uplink, *N_{dn}* user terminals are selected for simultaneous transmission on the downlink, *Nᵤₚ* may or may not be equal to *N_{dn}*, and *Nᵤₚ* and *N_{dn}* may be static values or can change for each scheduling interval. The beam-steering or some other spatial processing technique may be used at the access point and user terminal.

On the uplink, at each user terminal 120 selected for uplink transmission, a transmit (TX) data processor 288 receives traffic data from a data source 286 and control data from a controller 280. TX data processor 288 processes (e.g., encodes, interleaves, and modulates) the traffic data for the user terminal based on the coding and modulation schemes associated with the rate selected for the user terminal and provides a data symbol stream. A TX spatial processor 290 performs spatial processing on the data symbol stream and provides *N*_{*ut*,*m*} transmit symbol streams for the *N*_{*ut*,*m*} antennas. Each transmitter unit (TMTR) 254 receives and processes (e.g., converts to analog, amplifies, filters, and frequency upconverts) a respective transmit symbol stream to generate an uplink signals. *N*_{*ut*,*m*} transmitter units 254 provide *N*_{*ut*,*m*} uplink signals for transmission from *N*_{*ut*,*m*} antennas 252 to the access point.

*Nᵤₚ* user terminals may be scheduled for simultaneous transmission on the uplink. Each of these user terminals performs spatial processing on its data symbol stream and transmits its set of transmit symbol streams on the uplink to the access point.

At access point 110, *Nₐₚ* antennas 224a through 224ap receive the uplink signals from all *Nᵤₚ* user terminals transmitting on the uplink. Each antenna 224 provides a received signal to a respective receiver unit (RCVR) 222. Each receiver unit 222 performs processing complementary to that performed by transmitter unit 254 and provides a received symbol stream. An RX spatial processor 240 performs receiver spatial processing on the *Nₐₚ* received symbol streams from *Nₐₚ* receiver units 222 and provides *Nᵤₚ* recovered uplink data symbol streams. The receiver spatial processing is performed in accordance with the channel correlation matrix inversion (CCMI), minimum mean square error (MMSE), soft interference cancellation (SIC), or some other technique. Each recovered uplink data symbol stream is an estimate of a data symbol stream transmitted by a respective user terminal. An RX data processor 242 processes (e.g., demodulates, deinterleaves, and decodes) each recovered uplink data symbol stream in accordance with the rate used for that stream to obtain decoded data. The decoded data for each user terminal may be provided to a data sink 244 for storage and/or a controller 230 for further processing.

On the downlink, at access point 110, a TX data processor 210) receives traffic data from a data source 208 for *N_{dn}* user terminals scheduled for downlink transmission, control data from a controller 230, and possibly other data from a scheduler 234. The various types of data may be sent on different transport channels. TX data processor 210 processes (e.g., encodes, interleaves, and modulates) the traffic data for each user terminal based on the rate selected for that user terminal. TX data processor 210 provides *N_{dn}* downlink data symbol streams for the *N_{dn}* user terminals. A TX spatial processor 220 performs spatial processing (such as a precoding or beamforming, as described in the present disclosure) on the *N_{dn}* downlink data symbol streams, and provides *Nₐₚ* transmit symbol streams for the *Nₐₚ* antennas. Each transmitter unit 222 receives and processes a respective transmit symbol stream to generate a downlink signal. *Nₐₚ* transmitter units 222 providing *Nₐₚ* downlink signals for transmission from *Nₐₚ* antennas 224 to the user terminals.

At each user terminal 120, *N*_{*ut*,*m*} antennas 252 receive the *Nₐₚ* downlink signals from access point 110. Each receiver unit 254 processes a received signal from an associated antenna 252 and provides a received symbol stream. An RX spatial processor 260 performs receiver spatial processing on *N*_{*ut*,*m*} received symbol streams from *N*_{*ut*,*m*} receiver units 254 and provides a recovered downlink data symbol stream for the user terminal. The receiver spatial processing is performed in accordance with the CCMI, MMSE or some other technique. An RX data processor 270 processes (e.g., demodulates, deinterleaves and decodes) the recovered downlink data symbol stream to obtain decoded data for the user terminal.

At each user terminal 120, a channel estimator 278 estimates the downlink channel response and provides downlink channel estimates, which may include channel gain estimates, SNR estimates, noise variance and so on. Similarly, a channel estimator 228 estimates the uplink channel response and provides uplink channel estimates. Controller 280 for each user terminal typically derives the spatial filter matrix for the user terminal based on the downlink channel response matrix *H*_{*dn*,*m*} for that user terminal. Controller 230 derives the spatial filter matrix for the access point based on the effective uplink channel response matrix *H*_{*up*,}*_{eff}.* Controller 280 for each user terminal may send feedback information (e.g., the downlink and/or uplink eigenvectors, eigenvalues, SNR estimates, and so on) to the access point. Controllers 230 and 280 also control the operation of various processing units at access point 110 and user terminal 120, respectively.

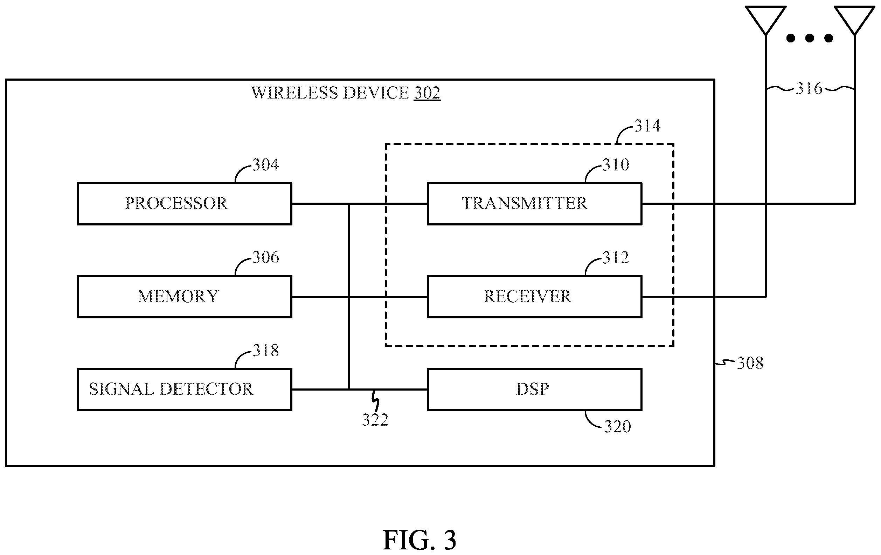

FIG. 3 illustrates various components that may be utilized in a wireless device 302 that may be employed within the MIMO system 100. The wireless device 302 is an example of a device that may be configured to implement the various methods described herein. The wireless device 302 may be an access point 110 or a user terminal 120.

The wireless device 302 may include a processor 304 which controls operation of the wireless device 302. The processor 304 may also be referred to as a central processing unit (CPU). Memory 306, which may include both read-only memory (ROM) and random access memory (RAM), provides instructions and data to the processor 304. A portion of the memory 306 may also include non-volatile random access memory (NVRAM). The processor 304 typically performs logical and arithmetic operations based on program instructions stored within the memory 306. The instructions in the memory 306 may be executable to implement the methods described herein.

The wireless device 302 may also include a housing 308 that may include a transmitter 310 and a receiver 312 to allow transmission and reception of data between the wireless device 302 and a remote location. The transmitter 310 and receiver 312 may be combined into a transceiver 314. A single or a plurality of transmit antennas 316 may be attached to the housing 308 and electrically coupled to the transceiver 314. The wireless device 302 may also include (not shown) multiple transmitters, multiple receivers, and multiple transceivers.

The wireless device 302 may also include a signal detector 318 that may be used in an effort to detect and quantify the level of signals received by the transceiver 314. The signal detector 318 may detect such signals as total energy, energy per subcarrier per symbol, power spectral density and other signals. The wireless device 302 may also include a digital signal processor (DSP) 320 for use in processing signals.

The various components of the wireless device 302 may be coupled together by a bus system 322, which may include a power bus, a control signal bus, and a status signal bus in addition to a data bus.

In a relay system utilizing low power devices as relays, it may be desirable to allow relays to enter a low power mode (e.g., sleep with one or more components powered down) whenever possible to reduce power consumption. Further, to keep costs down, it may be desirable to use relays with only limited memory. Thus, a relay may be able to buffer only a small amount of data, and may need to forward the data before being able to receive more.

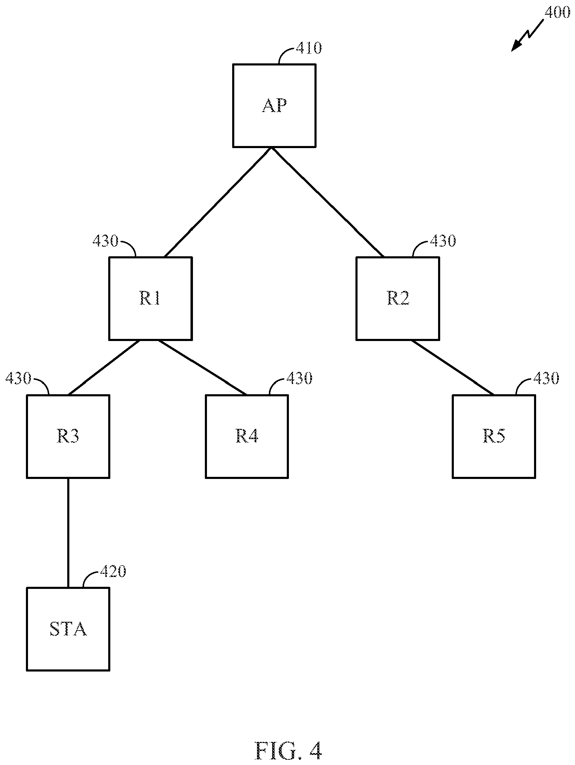

In a multi-hop relay system, such as that shown in FIG. 4, this may present some challenges on how to conserve power-and still ensure devices are awake at appropriate times to relay data. In general, all relays 430 (R1-R5) between an AP 410 and a leaf STA 420 may need to be able to exit a low power state (awaken) quickly, in order to transmit (relay) data in small chunks.

Techniques presented herein may be considered part of a power savings protocol that achieves the above two goals, allowing devices to conserve power and operate with limited amount memory. According to certain aspects, various mechanisms already defined in certain standards (e.g., 802.11 ah), for use in direct communications between an AP and stations, may be modified and extended for use in relay systems.

In various systems, such as IEEE 802.11ah, there may be motivations to utilize relay devices 430 between access points (APs) 410 and stations 420. For example, the use of relays may be desirable because, even with a potential increased downlink (DL) range with 900MHz (or other "sub-1GHz) carrier, it may not be sufficient in applications with remote sensors or scenarios with obstructions in AP to STA path. On the uplink, a STA may have substantially lower transmit power than an AP, so the STA may not be able to reach the AP.

Key Characteristics of such systems may include the use of a multi-hop relay using a tree structure, as shown in FIG. 4. A relay-node may be formed by any suitable entity, such as a non-AP-STA (e.g., any station that lacks the ability to act-or is not currently acting-as an AP) that connects to a parent node or an AP-STA that allows association by child nodes. -Node-to-node security may be ensured, for example, by the configuration of PSK between each pair of nodes. Relay nodes may support 4-address format with backward learning bridge. In some cases, automatic configuration and reconfiguration may be achieved, for example, with a relay node able to attach to a better "parent node." A relay node may, thus, monitor the health of the link to a parent node.

A relay node may also be configured to enter a low power state (e.g., a sleep mode with radio components powered down) in order to conserve battery power. In some cases, a relay node may be configured with scheduled wakeup periods, during which the relay node may transmit and receive data. To conserve power, however, rather than exit the low power state each wakeup period, a relay may decide to exit the low power state only when one or more conditions are met (e.g., when there has been an indication there is data for the relay node to transmit or receive).

Some stations may be sensor devices. Sensor and non-sensor stations may have different requirements and there may be benefit for providing different access parameters (via different EDCA parameter sets). Such sensor devices may be battery or powered wireless sensing devices. As sensor devices may be sensitive to power consumption, sensor devices may also be configured to enter a low power state in order to conserve battery power, thus it may be preferable to configure such devices with EDCA parameter sets that gives them priority over other types of devices (e.g., devices that are not as sensitive to power consumption. APs may be configured to support sensor only stations, non-sensor stations, and for both.

An AP may also be configured to enter a low power state (e.g., a doze mode with radio components powered down) in order to conserve battery power. In some cases, an AP may be configured with scheduled wakeup periods, during which the AP may transmit and receive data.

In general, an AP and STA may perform similar (e.g., symmetric or complementary) operations. Therefore, for many of the techniques described herein, an AP or STA may perform similar operations. To that end, the following description will sometimes refer to an "AP/STA" to reflect that an operation may be performed by either. Although, it should be understood that even if only "AP" or "STA" is used, it does not mean a corresponding operation or mechanism is limited to that type of device.

### MAXIMUM AWAY DURATION (MAD)

In some systems, an AP/STA may be out of reach of a device or group of devices to receive or transmit at certain intervals for various reasons. For example, a device may be in a low power state (e.g., sloop or doze) or a list of devices may be indicated in a restricted access window (RAW). Various other scenarios may also arise where a device is unavailable to another device.

Whatever the reason, it may be desirable to ensure such unavailable durations are not so long latency requirements are not met. For example, stations may have uplink latency requirements that might be difficult to meet if a device is unavailable for a duration greater than the latency requirement.

Aspects of the present disclosure may help ensure such latency requirements are met by allowing a device to communicate a desired maximum unavailable duration for a device, referred to herein as a maximum away duration (MAD). Such a MAD may be requested in a frame, for example, during association.

As noted above, an association request frame may contain elements defining characteristics of the sending device. However, current structures may not allow a device to specify the maximum time the station can be out of reach for a device to send or receive. Various devices may need to communicate or send an update at a particular rate (e.g., once every 10 milliseconds). In some cases, this uplink latency requirement may be critically important (e.g., a heart rate monitor).

Aspects of the present disclosure, however, may provide signaling mechanisms to enable a device to specify the maximum time the station may be out of reach for the device. A station may be out of reach for a device for various reasons including operating in other channels, dozing/sleeping, or operating in other RAWs. A MAD element may be utilized to indicate the uplink latency requirement of a particular device.

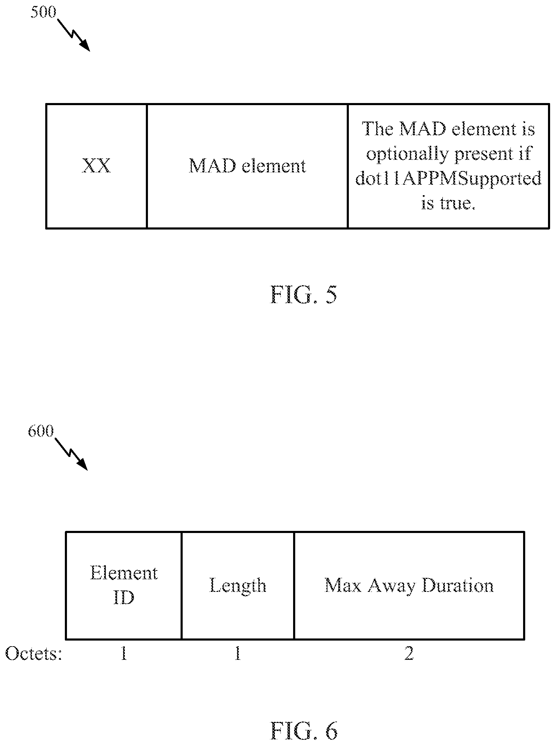

FIG. 5 illustrates an example of a MAD element 500 for inclusion in an association request/response frame body, in accordance with certain aspects of the present disclosure. The MAD element 500 may be included in various association frames including, but not limited to association request/response, re-association request/response, probe request/response, and disassociation frames.

Fig. 6 illustrates an example structure of a MAD element field 600, in accordance with certain aspects of the present disclosure. As illustrated, the structure 600 may include an element ID, length, and maximum away duration fields. The maximum away duration field within the MAD element indicates the duration that the station may be out of reach for the device and has a unit of microseconds. The element ID field identifies the element as a MAD element and the length field indicates the length of the element.

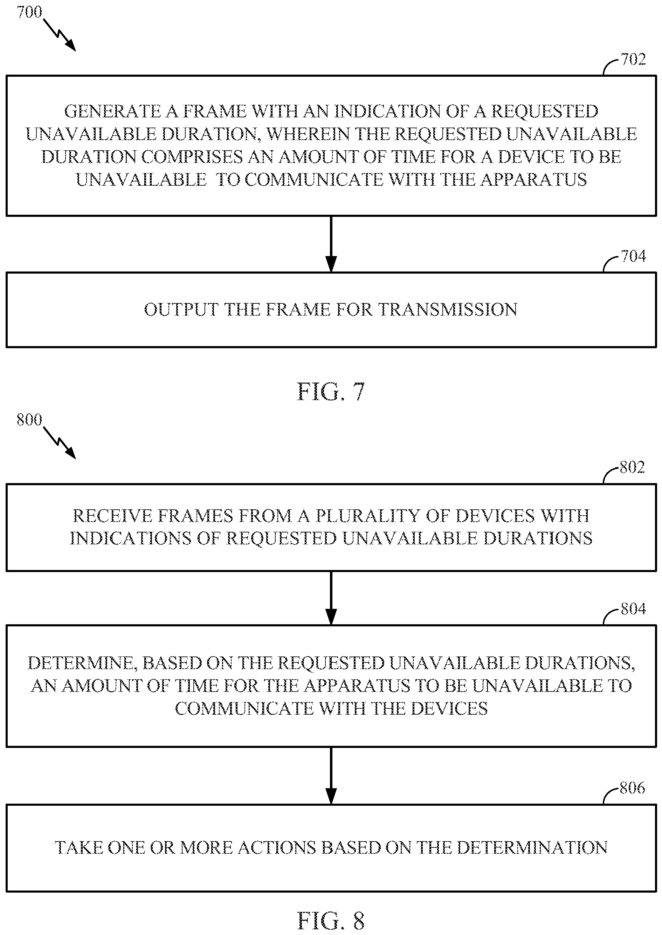

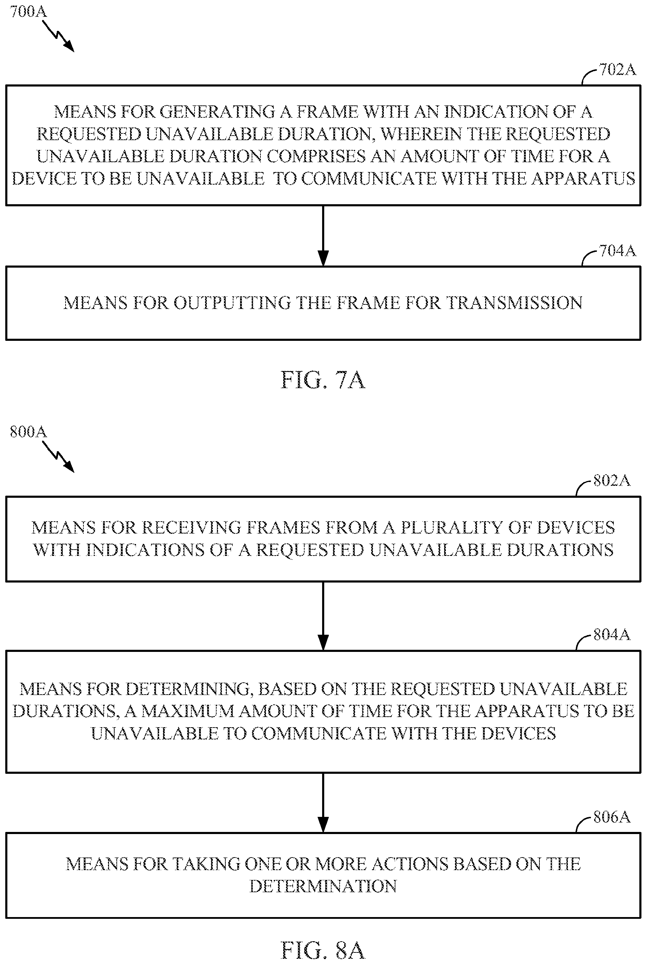

FIG. 7 illustrates example operations 700 for wireless communications by an apparatus, in accordance with aspects of the present disclosure. The operations 700 may be performed by an apparatus, such as a station, acting as a sensor device.

Operations 700 may begin at 702, by generate a frame with an indication of a requested unavailable duration, wherein the requested unavailable duration comprises an amount (e.g., a maximum) of time for a device to be unavailable to communicate with the apparatus. At 704, the apparatus outputs the frame for transmission.

FIG. 8 is a block diagram of operations 800 for wireless communications by an apparatus, in accordance with aspects of the present disclosure. The operations 800 may be performed by an apparatus, such as an access point.

Operations 800 may begin at 802, by receiving frames from a plurality of devices with an indication of a requested unavailable duration. At 804, the apparatus determines, based on the requested unavailable durations, an amount of time for the apparatus to be unavailable to communicate with the devices. At 806, the apparatus takes one or more actions based on the determination.

In some cases, a requested unavailable duration may be determined based on latency requirements for transmissions from the apparatus to the device. The request may be sent in a frame during an association procedure. In some cases, an access point may send a response frame comprising an indication of whether the access point accepts or rejects the requested unavailable duration. For example, an access point with a scheduled 50 ms sleep interval may reject a requested MAD interval of 30 ms. In some cases, the response frame comprises an indication of an unavailable duration suggested by the access point. For example, the access point with the scheduled 50 ms sleep interval may respond to the requested MAD by rejecting the requested duration and suggesting a 50 ms interval. The station may accept this suggested duration by sending a request with that value, or, alternatively, send a request with another value.

An access point may also take action to ensure it is not unavailable for a duration corresponding to a minimum MAD received from any of a set of stations (e.g., this may ensure all requirements are met). The actions may include, for example, setting the duration of a low power state or duration of RAW involving the stations. The AP may update its MAD value as the list of associated stations (and/or the requested MAD values) change.

Based on the MAD value, an AP may control the duration an AP is unavailable for any of a variety of reasons, such as an AP PM mode, Sub-channel Selective Transmission (SST) operation, Sectorized Operation, or any other operations that may result in the AP being unavailable for all or a group of devices, including the one the AP received the MAD element from. As noted above, such an unavailable duration may be limited to the minimum of the MAD times received by STAs outside of the group.

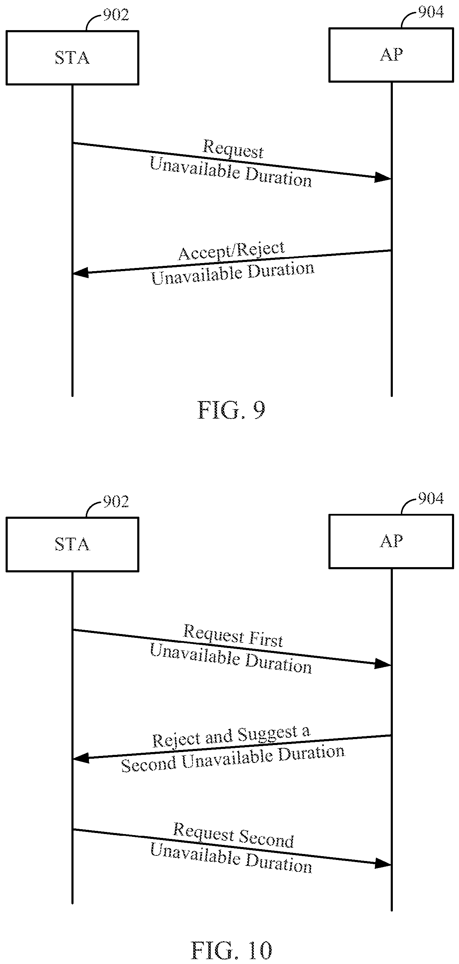

FIGs. 9 and 10 illustrate an example exchange between a station 902 and access point 904, in accordance with aspects of the present disclosure. As illustrated in FIG. 9, the station 902 may request a maximum unavailable value, and the access point 904 may respond, accepting or rejecting the request. As illustrated in FIG. 10, in some cases, when the AP rejects a request for a first maximum unavailable value, the AP may suggest a second maximum unavailable value. The station 902 may then send a request with this second maximum unavailable value, if, for example, the second maximum unavailable value is acceptable to the station. Alternatively, the station may request a different maximum unavailable value.

The various operations of methods described above may be performed by any suitable means capable of performing the corresponding functions. The means may include various hardware and/or software component(s) and/or module(s), including, but not limited to a circuit, an application specific integrated circuit (ASIC), or processor. Generally, where there are operations illustrated in figures, those operations may have corresponding counterpart means-plus-function components with similar numbering. For example, operations 700 and 800 illustrated in FIGs, 7 and 8 correspond to means 700A and 800A illustrated in FIGs. 7A and 8A, respectively.

For example, means for transmitting may comprise a transmitter (e.g., the transmitter unit 222) and/or an antenna(s) 224 of the access point 110 illustrated in FIG. 2 or the transmitter 310 and/or antenna(s) 316 depicted in FIG. 3. Means for receiving may comprise a receiver (e.g., the receiver unit 222) and/or an antenna(s) 224 of the access point 110 illustrated in FIG. 2 or the receiver 312 and/or antenna(s) 316 depicted in FIG. 3. Means for processing, means for determining, means for detecting, means for scanning, means for selecting, or means for germinating operation may comprise a processing system, which may include one or more processors, such as the RX data processor 242, the TX data processor 210, and/or the controller 230 of the access point 110 illustrated in FIG. 2 or the processor 304 and/or the DSP 320 portrayed in FIG. 3.

According to certain aspects, such means may be implemented by processing systems configured to perform the corresponding functions by implementing various algorithms (e.g., in hardware or by executing software instructions) described above for performing fast association. For example, means for determining and means for taking action may be implemented by a processing system performing an algorithm, means for generating a frame may be implemented by a processing system performing an algorithm that generates a frame with an indication of a requested unavailable duration or a frame indicating acceptance or rejection of the unavailable duration, while means for outputting may be implemented by a processing system performing an algorithm that takes, as input, the response frame for transmission and outputs structures for transmission by, for example, a transmitter, while means for taking one or more actions may be implemented by a processing system performing an algorithm that takes, as input, a determination and performs one or more actions based on the determination, while means for controlling may be implemented by a processing system that controls various aspects related to the duration an apparatus may be unavailable.

As used herein, the term "determining" encompasses a wide variety of actions. For example, "determining" may include calculating, computing, processing, deriving, investigating, looking up (e.g., looking up in a table, a database or another data structure), ascertaining and the like. Also, "determining" may include receiving (e.g., receiving information), accessing (e.g., accessing data in a memory) and the like. Also, "determining" may include resolving, selecting, choosing, establishing and the like.

As used herein, the term receiver may refer to an RF receiver (e.g., of an RF front end) or an interface (e.g., of a processor) for receiving structures processed by an RF front end (e.g., via a bus). Similarly, the term transmitter may refer to an RF transmitter of an RF front end or an interface (e.g., of a processor) for outputting structures to an RF front end for transmission (e.g., via a bus).

As used herein, a phrase referring to "at least one of" a list of items refers to any combination of those items, including single members. As an example, "at least one of: *a*, *b*, or *c*" is intended to cover *a*, *b*, *c*, *a*-*b*, *a-c*, *b-c*, and *a*-*b*-*c*, and *a-b-c*, as well as any combination with multiples of the same element (e.g., *a-a*, *a*-*a*-*a*, *a*-*a*-*b*, *a-a-c*, *a-a*-*b*, *a-c-c*, *a*-*b*, *b-b-b*, *b*-*b*-*c*, *c-c*, and *c-c-c* or any other ordering of *a, b*, and *c*).

The various illustrative logical blocks, modules and circuits described in connection with the present disclosure may be implemented or performed with a general purpose processor, a digital signal processor (DSP), an application specific integrated circuit (ASIC), a field programmable gate array (FPGA) or other programmable logic device (PLD), discrete gate or transistor logic, discrete hardware components, or any combination thereof designed to perform the functions described herein. A general-purpose processor may be a microprocessor, but in the alternative, the processor may be any commercially available processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the present disclosure may be embodied directly in hardware, in a software module executed by a processor, or in a combination of the two. A software module may reside in any form of storage medium that is known in the art. Some examples of storage media that may be used include random access memory (RAM), read only memory (ROM), flash memory, EPROM memory, EEPROM memory, registers, a hard disk, a removable disk, a CD-ROM and so forth. A software module may comprise a single instruction, or many instructions, and may be distributed over several different code segments, among different programs, and across multiple storage media. A storage medium may be coupled to a processor such that the processor can read information from, and write information to, the storage medium. In the alternative, the storage medium may be integral to the processor.

The methods disclosed herein comprise one or more steps or actions for achieving the described method. The method steps and/or actions may be interchanged with one another without departing from the scope of the claims. In other words, unless a specific order of steps or actions is specified, the order and/or use of specific steps and/or actions may be modified without departing from the scope of the claims.

The functions described may be implemented in hardware, software, firmware, or any combination thereof. If implemented in hardware, an example hardware configuration may comprise a processing system in a wireless node. The processing system may be implemented with a bus architecture. The bus may include any number of interconnecting buses and bridges depending on the specific application of the processing system and the overall design constraints. The bus may link together various circuits including a processor, machine-readable media, and a bus interface. The bus interface may be used to connect a network adapter, among other things, to the processing system via the bus. The network adapter may be used to implement the signal processing functions of the PHY layer. In the case of a user terminal 120 (see FIG. 1), a user interface (e.g., keypad, display, mouse, joystick, etc.) may also be connected to the bus. The bus may also link various other circuits such as timing sources, peripherals, voltage regulators, power management circuits, and the like, which are well known in the art, and therefore, will not be described any further.

The processor may be responsible for managing the bus and general processing, including the execution of software stored on the machine-readable media. The processor may be implemented with one or more general-purpose and/or special-purpose processors. Examples include microprocessors, microcontrollers, DSP processors, and other circuitry that can execute software. Software shall be construed broadly to mean instructions, data, or any combination thereof, whether referred to as software, firmware, middleware, microcode, hardware description language, or otherwise. Machine-readable media may include, by way of example, RAM (Random Access Memory), flash memory, ROM (Read Only Memory), PROM (Programmable Read-Only Memory), EPROM (Erasable Programmable Read-Only Memory), EEPROM (Electrically Erasable Programmable Read-Only Memory), registers, magnetic disks, optical disks, hard drives, or any other suitable storage medium, or any combination thereof. The machine-readable media may be embodied in a computer-program product. The computer-program product may comprise packaging materials.

In a hardware implementation, the machine-readable media may be part of the processing system separate from the processor. However, as those skilled in the art will readily appreciate, the machine-readable media, or any portion thereof, may be external to the processing system. By way of example, the machine-readable media may include a transmission line, a carrier wave modulated by data, and/or a computer product separate from the wireless node, all which may be accessed by the processor through the bus interface. Alternatively, or in addition, the machine-readable media, or any portion thereof, may be integrated into the processor, such as the case may be with cache and/or general register files.

The processing system may be configured as a general-purpose processing system with one or more microprocessors providing the processor functionality and external memory providing at least a portion of the machine-readable media, all linked together with other supporting circuitry through an external bus architecture. Alternatively, the processing system may be implemented with an ASIC (Application Specific Integrated Circuit) with the processor, the bus interface, the user interface in the case of an access terminal), supporting circuitry, and at least a portion of the machine-readable media integrated into a single chip, or with one or more FPGAs (Field Programmable Gate Arrays), PLDs (Programmable Logic Devices), controllers, state machines, gated logic, discrete hardware components, or any other suitable circuitry, or any combination of circuits that can perform the various functionality described throughout this disclosure. Those skilled in the art will recognize how best to implement the described functionality for the processing system depending on the particular application and the overall design constraints imposed on the overall system.

The machine-readable media may comprise a number of software modules. The software modules include instructions that, when executed by the processor, cause the processing system to perform various functions. The software modules may include a transmission module and a receiving module. Each software module may reside in a single storage device or be distributed across multiple storage devices. By way of example, a software module may be loaded into RAM from a hard drive when a triggering event occurs. During execution of the software module, the processor may load some of the instructions into cache to increase access speed. One or more cache lines may then be loaded into a general register file for execution by the processor. When referring to the functionality of a software module below, it will be understood that such functionality is implemented by the processor when executing instructions from that software module.

If implemented in software, the functions may be stored or transmitted over as one or more instructions or code on a computer-readable medium. Computer-readable media include both computer storage media and communication media including any medium that facilitates transfer of a computer program from one place to another. A storage medium may be any available medium that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared (IR), radio, and microwave, then the coaxial cable, fiber optic cable, twisted pair, DSL, or wireless technologies such as infrared, radio, and microwave are included in the definition of medium. Disk and disc, as used herein, include compact disc (CD), laser disc, optical disc, digital versatile disc (DVD), floppy disk, and Blu-ray® disc where disks usually reproduce data magnetically, while discs reproduce data optically with lasers. Thus, in some aspects computer-readable media may comprise non-transitory computer-readable media (e.g., tangible media). In addition, for other aspects computer-readable media may comprise transitory computer- readable media (e.g., a signal). Combinations of the above should also be included within the scope of computer-readable media.

Thus, certain aspects may comprise a computer program product for performing the operations presented herein. For example, such a computer program product may comprise a computer-readable medium having instructions stored (and/or encoded) thereon, the instructions being executable by one or more processors to perform the operations described herein. For certain aspects, the computer program product may include packaging material.

Further, it should be appreciated that modules and/or other appropriate means for performing the methods and techniques described herein can be downloaded and/or otherwise obtained by a user terminal and/or base station as applicable. For example, such a device can be coupled to a server to facilitate the transfer of means for performing the methods described herein. Alternatively, various methods described herein can be provided via storage means (e.g., RAM, ROM, a physical storage medium such as a compact disc (CD) or floppy disk, etc.), such that a user terminal and/or base station can obtain the various methods upon coupling or providing the storage means to the device. Moreover, any other suitable technique for providing the methods and techniques described herein to a device can be utilized.

It is to be understood that the claims are not limited to the precise configuration and components illustrated above. Various modifications, changes and variations may be made in the arrangement, operation and details of the methods and apparatus described above without departing from the scope of the claims.
In the following, further embodiments are described to facilitate the understanding of the invention:
1. An apparatus for wireless communications, comprising:
   a processing system configured to generate a frame with an indication of a requested unavailable duration, wherein the requested unavailable duration comprises an amount of time for a device to be unavailable to communicate with the apparatus; and
   an interface for outputting the frame for transmission.
2. The apparatus of embodiment 1, wherein:
   the requested unavailable duration is determined based on latency requirements for transmissions from the apparatus to the device.
3. The apparatus of embodiment 1, wherein the frame is output for transmission during a procedure for associating the apparatus with the device.
4. The apparatus of embodiment 1, further comprising:
   an interface for receiving a response frame comprising an indication of whether the device accepts or rejects the requested unavailable duration.
5. The apparatus of embodiment 4, wherein the response frame comprises an indication of an unavailable duration suggested by the device.
6. The apparatus of embodiment 5, wherein the processing system is configured to generate a frame indicating acceptance of the unavailable duration suggested by the device.
7. An apparatus for wireless communications, comprising:
   an interface for receiving frames from a plurality of devices with indications of requested unavailable durations; and
   a processing system configured to determine, based on the requested unavailable durations, an amount of time for the apparatus to be unavailable to communicate with the devices and to take one or more actions based on the determination.
8. The apparatus of embodiment 7, wherein the one or more actions comprise setting restricted access windows (RAWs) involving the devices.
9. The apparatus of embodiment 7, wherein the one or more actions comprise setting a duration while the apparatus is in a low power state.
10. The apparatus of embodiment 9, wherein the duration of the low power state is set based on a minimum value of a maximum away duration (MAD) value received from any of the devices.
11. The apparatus of embodiment 7, wherein the one or more actions comprise at least one of: controlling Sub-channel Selective Transmission (SST) operation or sectorized operation.
12. The apparatus of embodiment 7, wherein the frames are received during a procedure for associating the devices with the apparatus.
13. The apparatus of embodiment 7, wherein:
   the processing system is further configured to generate a response frame indicating whether the apparatus accepts or rejects the unavailable duration; and
   the apparatus further comprises an interface for outputting the response frame for transmission.
14. The apparatus of embodiment 13, wherein the response frame includes a different unavailable duration value if the response frame indicates the apparatus rejects the unavailable duration indicated in a request frame.
15. A method for wireless communications by an apparatus, comprising:
   generating a frame with an indication of a requested unavailable duration, wherein the requested unavailable duration comprises an amount of time for a device to be unavailable to communicate with the apparatus; and
   outputting the frame for transmission.
16. The method of embodiment 15, wherein:
   the requested unavailable duration is determined based on latency requirements for transmissions from the apparatus to the device.
17. The method of embodiment 15, wherein the frame is output for transmission during a procedure for associating the apparatus with the device.
18. The method of embodiment 15, further comprising:
   receiving a response frame comprising an indication of whether the device accepts or rejects the requested unavailable duration.
19. The method of embodiment 18, wherein the response frame comprises an indication of an unavailable duration suggested by the device.
20. The method of embodiment 19, further comprising generating a frame indicating acceptance of the unavailable duration suggested by the device.
21. A method for wireless communications by an apparatus, comprising:
   receiving frames from a plurality of devices with indications of requested unavailable durations;
   determining, based on the requested unavailable durations, an amount of time for the apparatus to be unavailable to communicate with the devices; and
   taking one or more actions based on the determination.
22. The method of embodiment 21, wherein the taking one or more actions comprise setting restricted access windows (RAWs) involving the devices.
23. The method of embodiment 21, wherein the taking one or more actions comprise setting a duration while the apparatus is in a low power state.
24. The method of embodiment 23, wherein the duration of the low power state is set based on a minimum value of a maximum away duration (MAD) value received from any of the devices
25. The method of embodiment 21, wherein the one or more actions comprise at least one of: controlling Sub-channel Selective Transmission (SST) operation or controlling sectorized operation.
26. The method of embodiment 21, wherein the frame is received during a procedure for associating the device with the apparatus.
27. The method of embodiment 21, further comprising:
   generating a response frame indicating whether the apparatus accepts or rejects the unavailable duration; and
   outputting the response frame for transmission.
28. The method of embodiment 27, wherein the response frame includes a different unavailable duration value if the response frame indicates the apparatus rejects the unavailable duration indicated in a request frame.
29. An apparatus for wireless communications, comprising:
   means for generating a frame with an indication of a requested unavailable duration, wherein the requested unavailable duration comprises an amount of time for a device to be unavailable to communicate with the apparatus; and
   means for outputting the frame for transmission.
30. The apparatus of embodiment 29, wherein:
   the requested unavailable duration is determined based on latency requirements for transmissions from the apparatus to the device.
31. The apparatus of embodiment 29, wherein the frame is output for transmission during a procedure for associating the apparatus with the device.
32. The apparatus of embodiment 29, further comprising:
   means for receiving a response frame comprising an indication of whether the device accepts or rejects the requested unavailable duration.
33. The apparatus of embodiment 32, wherein the response frame comprises an indication of an unavailable duration suggested by the device.
34. The apparatus of embodiment 33, further comprising means for generating a frame indicating acceptance of the unavailable duration suggested by the device.
35. An apparatus for wireless communications, comprising:
   means for receiving frames from a plurality of devices with indications of requested unavailable durations;
   means for determining, based on the requested unavailable durations, an amount of time for the apparatus to be unavailable to communicate with the devices; and
   means for taking one or more actions based on the determination.
36. The apparatus of embodiment 35, wherein means for taking one or more actions comprise setting restricted access windows (RAWs) involving the devices.
37. The apparatus of embodiment 35, wherein means for taking one or more actions comprise setting a duration while the apparatus is in a low power state.
38. The apparatus of embodiment 37, wherein the duration of the low power state is set based on a minimum value of a maximum away duration (MAD) value received from any of the devices.
39. The apparatus of embodiment 35, wherein means for taking one or more actions comprise at least one of: means for controlling Sub-channel Selective Transmission (SST) operation or means for controlling sectorized operation.
40. The apparatus of embodiment 35, wherein the frames are received during a procedure for associating the devices with the apparatus.
41. The apparatus of embodiment 35, further comprising:
   means for generating a response frame indicating whether the apparatus accepts or rejects the unavailable duration; and
   means for outputting the response frame for transmission.
42. The apparatus of embodiment 41, wherein the response frame includes a different unavailable duration value if the response frame indicates the apparatus rejects the unavailable duration indicated in a request frame.
43. A station, comprising:
   at least one antenna;
   a processing system configured to generate a frame with an indication of a requested unavailable duration, wherein the requested unavailable duration comprises an amount of time for a device to be unavailable to communicate with the apparatus; and
   a transmitter for transmitting the frame via the at least one antenna.
44. An access point, comprising:
   at least one antenna;
   an interface for receiving frames, via the at least one antenna, from a plurality of devices with indications of requested unavailable durations; and
   a processing system configured to determine, based on the requested unavailable durations, an amount of time for the apparatus to be unavailable to communicate with the devices and to take one or more actions based on the determination.

## Claims

1. A method (700) for wireless communications by an apparatus, **characterized by**:
generating (702) a frame with an indication of a requested maximum unavailable duration, wherein the requested maximum unavailable duration comprises an amount of time for a device to be unavailable to communicate with the apparatus; and
outputting (704) the frame for transmission, wherein the frame is output for transmission during a procedure for associating the apparatus with the device.

2. The method of claim 1, wherein:
the requested unavailable duration is determined based on latency requirements for transmissions from the apparatus to the device.

3. The method of claim 1, further comprising:
receiving a response frame comprising an indication of whether the device accepts or rejects the requested unavailable duration.

4. The method of claim 3, wherein the response frame comprises an indication of an unavailable duration suggested by the device.

5. The method of claim 4, further comprising generating a frame indicating acceptance of the unavailable duration suggested by the device.

6. A method (800) for wireless communications by an apparatus, **characterized by**:
receiving (802) frames from a plurality of devices with indications of requested maximum unavailable durations;
determining (804), based on the requested maximum unavailable durations, an amount of time for the apparatus to be unavailable to communicate with the devices; and
taking (806) one or more actions based on the determination, wherein the frame is received during a procedure for associating the device with the apparatus.

7. The method of claim 6, wherein the taking one or more actions comprise setting restricted access windows, RAWs, involving the devices.

8. The method of claim 6, wherein the taking one or more actions comprise setting a duration while the apparatus is in a low power state.

9. The method of claim 8, wherein the duration of the low power state is set based on a minimum value of a maximum away duration, MAD, value received from any of the devices.

10. The method of claim 6, wherein the one or more actions comprise at least one of: controlling Sub-channel Selective Transmission, SST, operation or controlling sectorized operation.

11. The method of claim 6, further comprising:
generating a response frame indicating whether the apparatus accepts or rejects the unavailable duration; and
outputting the response frame for transmission.

12. The method of claim 11, wherein the response frame includes a different unavailable duration value if the response frame indicates the apparatus rejects the unavailable duration indicated in a request frame.

13. An apparatus (700A) for wireless communications, **characterized by**:
means (702A) for generating a frame with an indication of a requested maximum unavailable duration, wherein the requested maximum unavailable duration comprises an amount of time for a device to be unavailable to communicate with the apparatus; and
means (704A) for outputting the frame for transmission, wherein the frame is output for transmission during a procedure for associating the apparatus with the device.

14. An apparatus (800A) for wireless communications, **characterized by**:
means (802A) for receiving frames from a plurality of devices with indications of requested maximum unavailable durations;
means (804A) for determining, based on the requested maximum unavailable durations, an amount of time for the apparatus to be unavailable to communicate with the devices; and
means (806A) for taking one or more actions based on the determination, wherein the frames are received during a procedure for associating the devices with the apparatus.

15. A computer program comprising instructions for carrying out a method according to any of claims 1 to 5 or 6 to 12 when executed by at least one processor.

## Patentansprüche

1. Ein Verfahren (700) für drahtlose Kommunikation an einer Vorrichtung, **gekennzeichnet durch**:
Erzeugen (702) eines Rahmens mit einer Angabe betreffend ein ersuchtes maximales nichtverfügbares Zeitintervall, wobei das ersuchte maximale nichtverfügbare Zeitintervall ein Zeitintervall für ein Nichtverfügbarsein eines Gerätes zum Kommunizieren mit der Vorrichtung umfasst; und
Ausgeben (704) des Rahmens für Übertragung, wobei der Rahmen für Übertragung während eines Verfahrens zum Assoziieren der Vorrichtung mit dem Gerät ausgegeben wird.

2. Das Verfahren gemäß Anspruch 1, wobei:
das ersuchte nichtverfügbare Zeitintervall basiert auf Latenz-Anforderungen für Übertragungen von der Vorrichtung zum Gerät bestimmt wird.

3. Das Verfahren gemäß Anspruch 1, ferner aufweisend:
Empfangen eines Antwortrahmens, welcher eine Angabe enthält, ob das Gerät das ersuchte nichtverfügbare Zeitintervall akzeptiert oder ablehnt.

4. Das Verfahren gemäß Anspruch 3, wobei der Antwortrahmen eine Angabe eines nichtverfügbaren Zeitintervalls enthält, das vom Gerät vorgeschlagen wird.

5. Das Verfahren gemäß Anspruch 4, ferner aufweisend: Erzeugen eines Rahmens, welcher das Akzeptieren des nichtverfügbaren Zeitintervalls angibt, das vom Gerät vorgeschlagen wird.

6. Ein Verfahren (800) für drahtlose Kommunikation an einer Vorrichtung, **gekennzeichnet durch**:
Empfangen (802) von Rahmen an einer Vielzahl von Geräten mit Angaben betreffend maximaler nichtverfügbarer Zeitdauern;
Bestimmen (804), basierend auf den angeforderten maximalen nichtverfügbaren Zeitintervallen, eines Zeitintervalls für die Vorrichtung währenddessen die Vorrichtung nichtverfügbar zum Kommunizieren mit den Geräten ist; und
Agieren (806) basierend auf das Bestimmen, wobei der Rahmen während einer Prozedur zum Assoziieren des Geräts mit der Vorrichtung empfangen wird.

7. Das Verfahren gemäß Anspruch 6, wobei das Agieren umfasst: Setzen von beschränkten Zugriffsfenstern, RAWs, welche die Geräte involvieren.

8. Das Verfahren gemäß Anspruch 6, wobei das Agieren umfasst: Setzen eines Zeitintervalls während die Vorrichtung in einem niedrigen Energiezustand ist.

9. Das Verfahren gemäß Anspruch 8, wobei das Zeitintervall des niedrigen Energiezustandes auf einem minimalen Wert eines maximalen Abwesenheits-Zeitintervalls-, MAD-, Wert basiert, welches von irgendeinem Gerät empfangen wird.

10. Das Verfahren gemäß Anspruch 6, wobei das Agieren zumindest ein Element aus der folgenden Menge umfasst: Kontrollieren des Betriebs einer Unterkanal-Selektiven-Übertragung, SST, oder Kontrollieren von Sektor-basiertem Betrieb.

11. Das Verfahren gemäß Anspruch 6, ferner aufweisend:
Erzeugen eines Anwort-Rahmens, welcher anzeigt, ob die Vorrichtung akzeptiert oder ablehnt das nichtverfügbare Zeitintervall; und
Ausgeben des Anwort-Rahmens für Übertragung.

12. Das Verfahren gemäß Anspruch 11, wobei der Anwort-Rahmen ein unterschiedliches nichtverfügbares Zeitintervall umfasst, falls der Antwort-Rahmen anzeigt, dass die Vorrichtung das nichtverfügbare Zeitintervall ablehnt, das in einem Anfrage-Rahmen angezeigt wird.

13. Eine Vorrichtung (700A) für drahtlose Kommunikation, **gekennzeichnet durch**:
Mittel (702A) zum Erzeugen eines Rahmens mit einer Angabe betreffend ein ersuchtes maximales nichtverfügbares Zeitintervall, wobei das ersuchte maximale nichtverfügbare Zeitintervall ein Zeitintervall für ein Nichtverfügbarsein eines Gerätes zum Kommunizieren mit der Vorrichtung umfasst; und
Mittel (704A) zum Ausgeben des Rahmens für Übertragung, wobei der Rahmen für Übertragung während eines Verfahrens zum Assoziieren der Vorrichtung mit dem Gerät ausgegeben wird.

14. Eine Vorrichtung (800A) für drahtlose Kommunikation, **gekennzeichnet durch**:
Mittel (802A) zum Empfangen von Rahmen an einer Vielzahl von Geräten mit Angaben betreffend maximaler nichtverfügbarer Zeitdauern;
Mittel (804A) zum Bestimmen, basierend auf die angeforderten maximalen nichtverfügbaren Zeitintervalle, eines Zeitintervalls für die Vorrichtung währenddessen die Vorrichtung nichtverfügbar zum Kommunizieren mit den Geräten ist; und
Mittel (806A) zum Agieren basierend auf dem Bestimmen, wobei der Rahmen während einer Prozedur zum Assoziieren des Geräts mit der Vorrichtung empfangen wird.

15. Ein Computerprogramm, welches Anweisungen aufweist zum Durchführen eines Verfahrens gemäß einem der Ansprüche 1 bis 5 oder 6 bis 12, wenn das Verfahren auf einem Computer ausgeführt wird.

## Revendications

1. Procédé (700) pour des communications sans fil par un appareil, **caractérisé par** :
la génération (702) d'une trame avec une indication d'une durée non disponible maximale demandée, dans lequel la durée non disponible maximale demandée comprend une quantité de temps pour qu'un dispositif soit indisponible pour communiquer avec l'appareil ; et
la fourniture (704) de la trame aux fins de transmission, dans lequel la trame est fournie aux fins de transmission durant une procédure pour associer l'appareil au dispositif.

2. Procédé selon la revendication 1, dans lequel :
la durée non disponible demandée est déterminée sur la base d'exigences de latence pour des transmissions de l'appareil vers le dispositif.

3. Procédé selon la revendication 1, comprenant en outre :
la réception d'une trame de réponse comprenant une indication précisant si le dispositif accepte ou rejette la durée non disponible demandée.

4. Procédé selon la revendication 3, dans lequel la trame de réponse comprend une indication d'une durée non disponible suggérée par le dispositif.

5. Procédé selon la revendication 4, comprenant en outre la génération d'une trame indiquant une acceptation de la durée non disponible suggérée par le dispositif.

6. Procédé (800) pour des communications sans fil par un appareil, **caractérisé par** :
la réception (802) de trames à partir d'une pluralité de dispositifs avec des indications de durées non disponibles maximales demandées ;
la détermination (804), sur la base des durées non disponibles maximales demandées, d'une quantité de temps pour que l'appareil soit indisponible pour communiquer avec les dispositifs ; et
la prise (806) d'une ou de plusieurs actions sur la base de la détermination, dans lequel la trame est reçue durant une procédure pour associer le dispositif à l'appareil.

7. Procédé selon la revendication 6, dans lequel la prise d'une ou de plusieurs actions comprend le réglage de fenêtres d'accès restreint, RAW, impliquant les dispositifs.

8. Procédé selon la revendication 6, dans lequel la prise d'une ou de plusieurs actions comprend le réglage d'une durée pendant laquelle l'appareil est dans un état de faible puissance.

9. Procédé selon la revendication 8, dans lequel la durée de l'état de faible puissance est réglée sur la base d'une valeur minimale d'une valeur de durée d'éloignement maximale, MAD, reçue de l'un quelconque des dispositifs.

10. Procédé selon la revendication 6, dans lequel les une ou plusieurs actions comprennent au moins une parmi : la commande d'une opération de transmission sélective de sous-canal, SST, ou la commande d'une opération sectorisée.

11. Procédé selon la revendication 6, comprenant en outre :
la génération d'une trame de réponse indiquant si l'appareil accepte ou rejette la durée non disponible ; et
la fourniture de la trame de réponse aux fins de transmission.

12. Procédé selon la revendication 11, dans lequel la trame de réponse inclut une valeur de durée non disponible différente si la trame de réponse indique que l'appareil rejette la durée non disponible indiquée dans une trame de demande.

13. Appareil (700A) pour des communications sans fil, **caractérisé par** :
un moyen (702A) pour générer une trame avec une indication d'une durée non disponible maximale demandée, dans lequel la durée non disponible maximale demandée comprend une quantité de temps pour qu'un dispositif soit indisponible pour communiquer avec l'appareil ; et
un moyen (704A) pour fournir la trame aux fins de transmission, dans lequel la trame est fournie aux fins de transmission durant une procédure pour associer l'appareil au dispositif.

14. Appareil (800A) pour des communications sans fil, **caractérisé par** :
un moyen (802A) pour recevoir des trames d'une pluralité de dispositifs avec des indications de durées non disponibles maximales demandées ;
un moyen (804A) pour déterminer, sur la base des durées non disponibles maximales demandées, une quantité de temps pour que l'appareil soit indisponible pour communiquer avec les dispositifs ; et
un moyen (806A) pour prendre une ou plusieurs actions sur la base de la détermination, dans lequel les trames sont reçues durant une procédure pour associer les dispositifs à l'appareil.

15. Programme d'ordinateur comprenant des instructions pour effectuer un procédé selon l'une quelconque des revendications 1 à 5 ou 6 à 12 lorsqu'elles sont exécutées par au moins un processeur.
